# FASCICULE DE BREVET EUROPEEN

(11) **EP 3 464 110 B1**
(45) Date de publication et mention de la délivrance du brevet: **09.03.2022**
(21) Numéro de dépôt: 17723707.0
(22) Date de dépôt: 18.05.2017
(51) Int. Cl.: B65D 75/22, B65D 75/32, B65D 75/58, B65D 85/76, A01J 27/02

(54) **EMBALLAGE ALIMENTAIRE POUR PRODUIT LAITIER OU FROMAGER, ET PROCÉDÉ DE FABRICATION ASSOCIÉ**
LEBENSMITTELVERPACKUNG FÜR MILCH- UND KÄSEPRODUKTE, UND ZUGEHÖRIGES HERSTELLUNGSVERFAHREN
FOOD PACKAGING FOR MILK AND CHEESE PRODUCTS, AND ASSOCIATED PRODUCTION METHOD

(30) Priorité: 02.06.2016 FR 1654998
(43) Date de publication de la demande: 10.04.2019
(73) Titulaire: SAVENCIA SA, 78220 Viroflay (FR)
(72) Inventeur: COURAUD, Pascal, 24750 CHAMPCEVINEL (FR); PORTE, Joël, 24660 COULOUNIEIX-CHAMIERS (FR)
(74) Mandataire: Gevers & Orès
(86) Numéro de dépôt international: PCT/EP2017/061955
(87) Numéro de publication internationale: WO 2017/207287

(56) Documents cités:
- WO-A1-2006/131625
- WO-A2-2008/003842
- DE-A1-102011 119 385
- DE-U- 1 732 871
- FR-A1- 2 495 582
- FR-A1- 2 895 982
- US-A- 4 273 249

## Description

L'invention concerne un emballage alimentaire pour produit laitier ou fromager. L'invention concerne, en outre, un procédé de fabrication d'un emballage alimentaire.

Il est connu d'emballer des portions de produits fromager à l'aide de films aluminium. Il est aussi connu de prévoir des emballages rigides, ou semi-rigides, en plastique ou bien en cire.

Dans le cas des emballages connus, l'utilisateur doit souvent utiliser un couvert (couteau, cuiller) pour consommer le produit fromager une fois l'emballage ouvert. Dans le cas des produits fromagers suffisamment consistants pour ne pas se répandre une fois sortis de leur emballage, il est aussi connu des documents WO2006/131625, WO2008/003842, FR2495582, et DE102011119385, que l'utilisateur utilise ses doigts pour se servir, notamment dans le cadre de mini portions de produits fromagers. Les enfants ne sont généralement pas dérangés par une telle utilisation. Ce n'est pas le cas des adultes.

Il a alors été proposé de présenter de tels produits fromagers sur des bâtons, à l'intérieur de coques, pour en assurer la consommation sans toucher le produit une fois les coques pelées.

Un des objets de l'invention vise à prévoir un emballage alimentaire pour produit laitier ou fromager, permettant à l'utilisateur de consommer le produit laitier ou fromager sans utiliser ses doigts pour le saisir.

Ainsi, l'invention concerne un emballage alimentaire pour produit laitier ou fromager selon les caractéristiques de la revendication 1, comprenant deux coques, creuses, chacune des deux coques présentant un plan de symétrie et s'étendant sur une profondeur et une épaisseur prédéfinies, l'emballage étant configuré pour occuper deux positions, une première position, dite de repos, dans laquelle les deux coques sont scellées entre elles le long d'un plan de joint de manière à former un espace interne, unique, recevant une portion de produit laitier ou fromager occupant l'ensemble dudit espace interne, ledit plan de joint étant orthogonal au plan de symétrie, et une seconde position, dite d'utilisation, dans laquelle les deux coques sont séparées de manière à permettre un accès à ladite portion de produit fromager.

Selon l'invention, chaque coque présente une profondeur, mesurée dans ledit plan de symétrie, qui est supérieure à son épaisseur, mesurée dans ledit plan de joint.

L'emballage alimentaire de l'invention comprend deux coques présentant une profondeur supérieure à son épaisseur. Cela permet de prévoir un emballage avec une forme particulière. Une fois en position d'utilisation, c'est-à-dire une fois que les coques sont séparées l'une de l'autre, le produit laitier ou fromager peut être maintenu à l'aide de l'une des coques qui présente une profondeur supérieure à son épaisseur. Autrement dit, l'utilisateur pourra consommer le produit laitier ou fromager en le tenant par cette coque, ceci sans avoir à utiliser ses doigts pour saisir le produit.

Cet avantage est permis par la forme donnée aux deux coques, lesdites coques présentant une profondeur pouvant être non négligeable.

Selon différents modes de réalisation de l'invention, qui pourront être pris ensemble ou séparément :
- lesdites deux coques sont en matière plastique,
- les deux coques sont deux demi-coques identiques, de sorte que ledit espace interne présente un volume également réparti entre les deux coques,
- les deux coques sont deux demi-coques non identiques, de sorte que ledit espace interne présente un volume inégalement réparti entre les deux coques,
- en position de repos, les deux coques présentent un ensemble ayant une forme circulaire dans le plan de symétrie.

L'invention concerne aussi un procédé de fabrication d'un emballage alimentaire pour produit laitier ou fromager ayant les caractéristiques de la revendication 5, comprenant les étapes suivantes :
a) thermoformage d'au moins une bobine de film plastique de sorte à obtenir deux coques, creuses, chacune des deux coques présentant un plan de symétrie et s'étendant sur une profondeur et une épaisseur prédéfinies, la profondeur de chaque coque, mesurée dans ledit plan de symétrie, étant supérieure à son épaisseur, mesurée dans un plan orthogonal audit plan de symétrie,
b) scellage des deux coques le long d'un plan de joint de manière à former un espace interne, unique, destiné à recevoir une portion de produit laitier ou fromager occupant l'ensemble dudit espace interne, avec création d'un col de dosage,
c) dosage, via ledit col de dosage, du produit fromager de sorte à remplir l'ensemble de l'espace formé entre les deux coques.

Selon l'invention:
- le dosage de l'étape c) se fait à une température supérieure à 70°C, notamment entre 72°C et 95°C,
- le procédé de l'invention comprend, en outre, les étapes suivantes :
   d) scellage et fermeture du col,
   e) découpe des coques de sorte à former une plage de scellage faisant saillie desdites coques, au niveau du plan de joint, hors dudit espace interne, et de sorte à former, en outre, des languettes configurées pour actionner le passage de l'emballage d'une position de repos, dans laquelle les deux coques sont scellées entre elles, vers une position d'utilisation, dans laquelle les deux coques sont séparées.

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence aux dessins schématiques annexés :
- les figures 1a, 1b et 1c sont des illustrations schématiques représentant de manière isométrique un premier exemple de réalisation d'un emballage selon l'invention, en position de repos, en vue de face, de côté et en vue de côté légèrement inclinée,
- les figures 2a, 2b et 2c sont des illustrations schématiques représentant de manière isométrique un deuxième exemple de réalisation d'un emballage ne faisant pas partie de l'invention, en position de repos, en vue de face, de côté et en vue de côté légèrement inclinée,
- la figure 3 est une illustration schématique représentant de manière isométrique l'emballage des figures 1a, 1b et 1c en position d'utilisation,
- la figure 4 est aussi illustration schématique représentant de manière isométrique l'emballage des figures 1a, 1b et 1c en position d'utilisation, la portion de produit fromager étant différente par rapport à celle de la figure précédente,
- la figure 5 est une illustration schématique représentant de manière schématique un exemple de réalisation supplémentaire d'un emballage ne faisant pas partie de l'invention, en position de repos, en vue de face.

Comme illustré sur les figures, l'invention concerne un emballage alimentaire 10 pour produit laitier ou fromager 20.

On entend par produit laitier ou fromager 20, un produit suffisamment consistant pour ne pas se répandre une fois sorti de son emballage. Autrement dit, le produit laitier ou fromager 20 ne se présente pas sous forme liquide aux conditions normales de température et de pression.

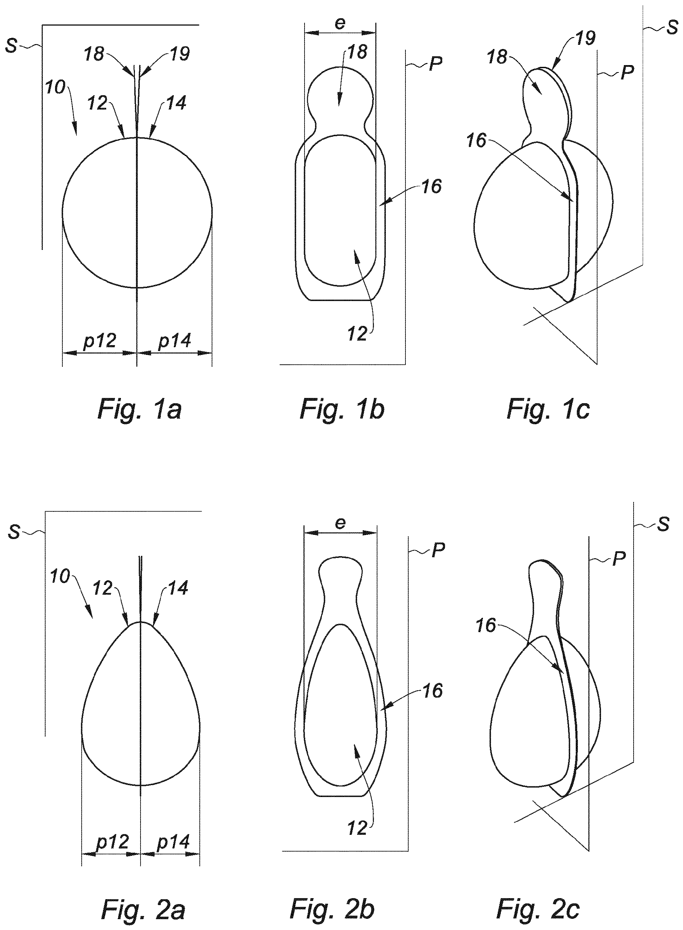

L'emballage 10 comprend deux coques 12, 14, creuses, chacune présentant un plan de symétrie. Ce plan est repéré S sur les figures. Pour les figures 1a, 2a et 5, ce plan est celui de la feuille.

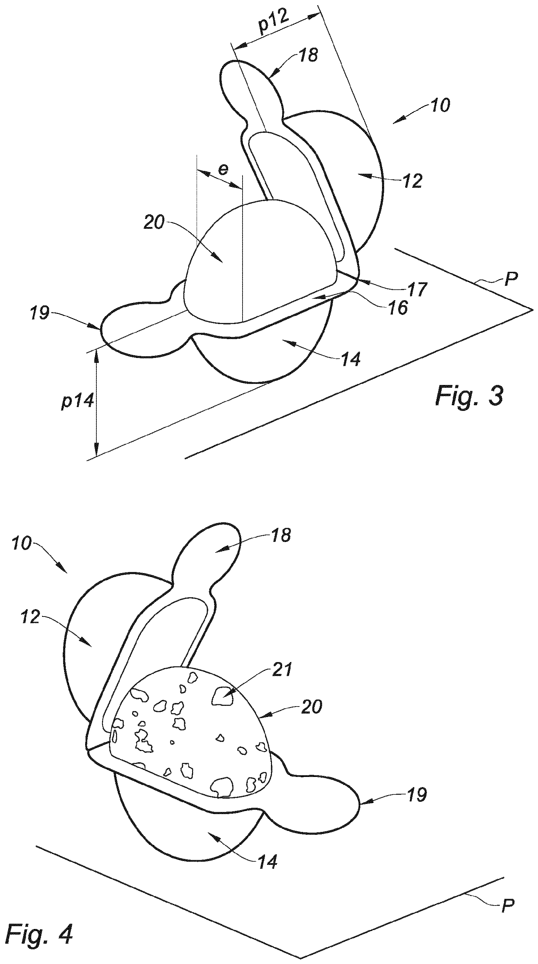

Comme cela est particulièrement visible sur les figures 1a, 1b, 2a et 2b, lesdites deux coques 12, 14 s'étendent sur une profondeur p12, p14 et une épaisseur e prédéfinies. La figure 3 illustre aussi les profondeurs p12, p14 de chacune des coques 12, 14.

Selon l'invention, la profondeur p12, p14 mesurée dans le plan de symétrie S est supérieure à l'épaisseur e mesurée dans un plan qui est orthogonal audit plan de symétrie S. Un tel plan orthogonal est repéré P sur les figures. Il sera confondu avec un plan, dit plan de joint 16, dans la suite de la description.

A titre d'exemple, la profondeur p12, p14 sera comprise entre 5 et 30mm, tandis que l'épaisseur e, sera elle, comprise entre 5 et 20mm.

L'emballage 10 est configuré pour occuper deux positions.

Comme illustré sur les figures 1a, 1b, 1c, 2a, 2b et 2c, l'emballage 10 occupe une première position, dite de repos, ou fermée, dans laquelle les deux coques 12, 14 sont scellées entre elles le long d'un plan de joint 16. Un espace interne, unique, est ainsi formé entre les deux coques 12, 14. Autrement dit, les deux coques 12, 14 ne sont pas munies de séparateurs entre elles, par exemple un film ou un opercule pelable. Encore autrement dit, l'espace interne défini par le creux de chacune des deux coques 12, 14 est libre de tout élément créant une frontière entre lesdites coques 12, 14.

Cet espace interne est destiné à recevoir une portion 20 de produit laitier ou fromager, ladite portion 20 occupant l'ensemble dudit espace interne. On entend par « portion occupant l'ensemble dudit espace interne », une portion qui prend la forme dudit espace interne. Autrement dit, la portion de produit laitier ou fromager est au contact des parois internes des deux coques creuses 12, 14 lorsque l'emballage 10 est en position de repos.

D'autre part, le plan de joint 16 est orthogonal au plan de symétrie S.

Ce plan de joint 16 pourra être curviligne ; c'est-à-dire qu'il pourra dessiner une courbe dans le plan de symétrie S, ceci sans sortir du cadre de l'invention.

Comme illustré sur les figures 3 et 4, l'emballage 10 occupe une seconde position, dite d'utilisation ou ouverte, dans laquelle les deux coques 12, 14 sont séparées de manière à permettre un accès à ladite portion 20 de produit laitier ou fromager.

Cette séparation sera avantageusement irréversible. Autrement dit, le passage de la position de repos à la position d'utilisation sera à sens unique.

D'autre part, l'emballage 10 pourra comprendre une zone charnière 17 (voir figure 3) qui aura pour fonction d'articuler les deux coques 12, 14 l'une par rapport à l'autre, après séparation desdites deux coques 12, 14. Cette zone charnière 17 permettra d'accompagner avantageusement la gestuelle du consommateur lors du passage de la position de repos à la position d'utilisation.

L'emballage 10 de l'invention permet donc à l'utilisateur d'accéder à la portion 20 de produit laitier ou fromager sans utiliser ses doigts, ni de couvert spécifique. Il peut en effet, avec l'emballage 10 de l'invention, consommer directement le produit laitier ou fromager en le portant à sa bouche, une main maintenant une première des deux coques 14, l'autre coque 12 ayant été désolidarisée de ladite première coque 14 (voir figures 3 et 4). Pour permettre la consommation en totalité du produit 20, l'utilisateur pourra agir, en outre, sur la coque 14 qu'il maintient, pour la déformer et donc pousser la partie du produit 20 restant, ceci sans que ses doigts n'entrent en contact avec le produit 20.

A titre de précision, les deux coques 12, 14 ne se déforment pas sous l'action de la gravité une fois l'emballage 10 en position d'utilisation. Autrement dit, les deux coques sont suffisamment rigides, prises seules, pour ne pas subir de déformation au seul effleurement des doigts d'un utlisateur.

Lesdites deux coques 12, 14 seront avantageusement prévues en matière plastique.

Par exemple, le matériau plastique utilisé pour la fabrication de ces deux coques 12, 14 comprendra plusieurs couches dont la base structurante pourra être en Polystyrène, Polyamide, Polypropylène ou encore en un autre polymère. La base structurante confèrera la résistance mécanique auxdites coques 12, 14. Le matériau plastique pourra aussi comprendre aussi une couche en Polyéthylène téréphtalate (PET) orienté, ou extrudé, pour l'impression. Cette couche en PET participera à la résistance thermique desdites coques 12, 14. Cette couche en PET participera aussi à la résistance mécanique et thermique au scellage le long dudit plan de joint 16 desdites deux coques 12, 14 entre elles.

La couche permettant le scellage, en Polyéthylène (PE) ou en Polypropylène (PP), aura des propriétés de pelabilité permettant une ouverture facile de l'emballage 10, aussi bien pour des enfants que pour des adultes. On entend pour « ouverture de l'emballage », le passage de la position de repos à la position d'utilisation au sens de l'invention.

La valeur de force de pelabilité sera avantageusement adaptable ; elle sera de préférence comprise entre 4 et 25N.

Afin d'améliorer la conservation du produit alimentaire, le matériau plastique utilisé pour la fabrication des deux coques 12, 14 pourra aussi contenir une couche barrière au gaz, par exemple une couche résine EVOH de marque « EVAL » ou « NIPPON GOSHEI », et/ou une couche barrière à la lumière, et/ou une couche barrière à l'eau, et/ou une couche barrière à la vapeur d'eau.

Le matériau qui sera utilisé pourra aussi être décoré par une impression en extérieur ou à l'intérieur, par exemple par une technologie cello-émail. Ledit matériau pourra avoir un rendu allant du brillant au mat, soit par la pose d'un vernis, soit par la nature même du film utilisé pour la fabrication desdites coques 12, 14.

Les deux coques 12, 14 pourront avantageusement se présenter sous la forme de deux demi-coques 12, 14 identiques, de sorte que ledit espace interne présentera un volume également réparti entre les deux coques 12, 14. La forme avec deux demi-coques 12, 14 identiques permet une ouverture libérant la moitié du produit alimentaire ce qui permet de tenir l'autre demi coque, sans distinction, et de porter le produit à la bouche sans avoir à prendre le produit avec les doigts.

Les deux coques 12, 14 pourront avantageusement se présenter sous la forme de deux demi-coques 12, 14 différentes (exemple de réalisation non illustré ici). L'espace interne présentera alors un volume inégalement réparti entre les deux coques 12, 14. Par exemple une première desdites deux coques formera un tiers du volume global dudit espace interne tandis que la seconde des deux coques formera, elle, les deux tiers du volume restant dudit espace interne. Cet exemple de réalisation non illustré présente l'avantage d'encore faciliter la consommation du produit laitier ou fromager 20 lorsque l'emballage est en position d'utilisation.

Les deux coques 12, 14 présentent deux faces planes, lesdites deux faces étant situées de part et d'autre du plan de symétrie S : voir figures 1a, 1b, 1c, 3 et 4. Sur ces figures, lesdites deux faces s'étendent selon une direction parallèle audit plan de symétrie S. Ainsi, la portion de produit 20 se présentera sous une forme de roue pleine, ou encore sous la forme d'un cylindre ayant une hauteur correspondant à l'épaisseur e.

Dans les cas présentés directement ci-dessus, les deux coques 12, 14 présenteront un ensemble ayant une forme circulaire dans le plan de symétrie S.

Selon un deuxième exemple de réalisation illustré aux figures 2a, 2b et 2c, l'emballage 10, en position de repos, présentera un ensemble ayant une forme en amande dans le plan de symétrie S. Ainsi, la portion de produit 20 se présentera en forme d'amande une fois les deux coques 12, 14 désolidarisées l'une de l'autre.

Ces formes ne sont pas limitatives et toute autre forme entrant dans le cadre de l'invention est envisageable.

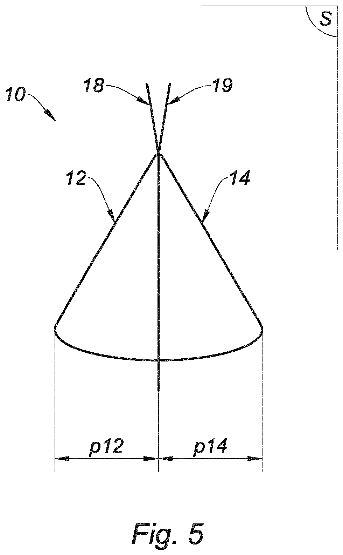

Selon encore un exemple supplémentaire illustré schématiquement à la figure 5, l'emballage 10, en position de repos, présentera une forme triangulaire dans le plan de symétrie S. Ainsi, la portion de produit 20 se présentera en forme de portion triangulaire une fois les deux coques 12, 14 désolidarisées l'une de l'autre.

L'invention concerne également un procédé de fabrication d'un emballage alimentaire 10 pour produit laitier ou fromager 20, par exemple l'emballage 10 décrit ci-dessus.

Ledit procédé comprendra les étapes suivantes :
a) thermoformage d'au moins une bobine de film plastique de sorte à obtenir deux coques 12, 14, creuses, telles que définies ci-dessus,
b) scellage des deux coques 12, 14 le long d'un plan de joint 16 de manière à former un espace interne tel que défini ci-dessus, avec création d'un col de dosage (le col de dosage n'est pas illustré ici),
c) dosage, via ledit col de dosage, du produit laitier ou fromager 20 de sorte à
   remplir l'espace formé entre les deux coques 12, 14.

Le thermoformage de l'étape a) pourra être vertical ou horizontal, réalisé à partir d'une ou de deux bobines de film plastique d'une épaisseur pouvant varier de 200 à 500µm. Le film plastique sera avantageusement compatible avec un dosage à chaud.

Le procédé de l'invention n'est pas limité au thermoformage.

L'étape a) du procédé de fabrication de cet emballage 10 pourra aussi se faire par une technologie d'injection plastique pour former les deux coques 12, 14 qui seront ensuite scellées entre elles selon l'étape b).

L'étape de scellage b) sera réalisée par conduction, par haute fréquence ou par induction.

Il est à noter que l'étape de dosage - étape c) - se fait à une température supérieure à 70°C, notamment entre 72°C et 95°C, de 72°C. Cette température correspond à une température de pasteurisation préférée dans le cadre des produits laitier ou fromager 20 destinés à l'emballage 10.

Il est à noter, aussi, que ce dosage pourra se faire sur plusieurs pistes, notamment à l'aide d'un système qui peut avoir un asservissement de monte et baisse afin de s'assurer que l'ensemble de l'espace interne est rempli et, ainsi, éviter d'avoir une incorporation d'air à l'intérieur de l'emballage 10, et plus précisément à l'intérieur du produit laitier ou fromager 20.

Ledit dosage pourra aussi se faire dans des conditions ultra propres pour permettre une longue conservation du produit laitier ou fromager 20 (par exemple supérieur à 6 mois).

Le procédé de l'invention comprendra, en outre, les étapes suivantes :
d) scellage et fermeture du col,
e) découpe des coques de sorte à former une plage de scellage faisant saillie desdites coques 12, 14, au niveau du plan de joint 16, hors dudit espace interne (voir figures 1b, 1c, 2b, 2c et 3).

Ladite étape de découpe e) permettra aussi de former des languettes 18, 19 configurées pour actionner le passage de l'emballage 10 d'une position de repos, dans laquelle les deux coques 12, 14 sont scellées entre elles, vers une position d'utilisation, dans laquelle les deux coques 12, 14 sont séparées. Autrement dit, les languettes 18, 19, visibles sur les figures 1a, 1b, 1c, 3, 4 et 5 permettent d'ouvrir l'emballage 10. Elles ne sont pas scellées entre elles lors de l'étape b) ci-dessus, ni même lors de l'étape d). Encore autrement dit, ces languettes sont facilement séparables l'une de l'autre, notamment du bout des doigts d'un utilisateur, enfant ou adulte.

D'autre part, c'est l'action de séparation des deux coques 12, 14, en tirant sur les languettes 18, 19, qui permet un accès à la portion de produit laitier ou fromager 20 contenu à l'intérieur de l'emballage 10.

Plus précisément, la plage de scellage sera prévue sur une hauteur de l'ordre de 2mm environ. Les languettes 18, 19 feront saillies desdites coques 12, 14, en direction opposée dudit espace interne, sur une distance supérieure à celle de la plage de scellage, ceci pour s'assurer qu'elles s'étendent hors de cette plage de scellage ; autrement dit pour s'assurer qu'elles soient libres l'une par rapport à l'autre à partir de l'extrémité de ladite plage de scellage.

Il est à noter qu'une étape de refroidissement du produit est prévue après qu'il ait été dosé à chaud.

Il est à noter, aussi, que le produit est dosé, sous forme liquide, avec une viscosité permettant le remplissage de la coque ; il acquiert une solidité relative après ladite phase de refroidissement.

L'emballage 10 de l'invention obtenu avec ledit procédé de fabrication présente l'avantage de présenter un plan de joint 16, ou encore un plan de coupe, orthogonal au plan de symétrie S, qui est agencé de manière à permettre la séparation des deux coques 12, 14 afin d'assurer un accès facile à une portion de produit laitier ou fromager qui est une portion une et entière.

Il est intéressant de noter qu'en position de repos, l'emballage 10 de l'invention présente une fermeture étanche. Cette fermeture pourra ne pas être entièrement étanche, ceci sans que cela nuise à l'invention.

L'emballage 10 de l'invention sera particulièrement indiqué pour des portions de produit laitier ou fromager qui seront comprises entre 5 et 30g, et de préférence de l'ordre de 15g environ. Autrement dit, l'emballage 10 de l'invention sera particulièrement indiqué pour des portions de produit laitier ou fromager qui seront comprises entre 5 et 30mL.

Il est à noter, encore, que l'emballage 10 trouve une application particulière pour un produit laitier ou fromager sous forme de spécialité laitière, fromagère, fromage frais ou de fromage fondu, préparé à partir de matières premières laitières et d'ingrédients d'aromatisation (fromage, préparation sucrées ou salées, arômes) qui pourront avantageusement représentés jusqu'à 50% dudit produit laitier ou fromager.

Le produit pourra aussi contenir des ingrédients croquants et visibles, notamment dans un but esthétique et/ou dans le but d'obtenir une signature organoleptique originale (voir repère 21 sur la figure 4).

Il est aussi à noter que d'autres variantes de réalisation sont encore possibles. Notamment il est aussi envisageable, dans un exemple de réalisation non illustré ici, l'intégration d'un petit outil complémentaire, dans l'emballage, par exemple une cuiller. Un accessoire ou un pic, voire un bâtonnet, pourront aussi être associés afin de participer à la consommation totale du produit sans contact avec les doigts.

Il est à noter que le matériau plastique utilisé pour la fabrication des coques présentera, avant sa mise en volume, les caractéristiques suivantes :
- une perméabilité à l'oxygène inférieure ou égale à 1 cm³/m².d.atm (mesure effectuée à 23°C et à un taux de 50% d'humidité relative) ; et/ou
- une perméabilité à la vapeur d'eau inférieure ou égale à 6g/m².d (mesure effectuée à 38°C et à un taux de 90% d'humidité relative).

Il est à noter, encore, que l'emballage 10 obtenu selon l'invention se conservera avantageusement, en froid positif et/ou hors froid, pour une durée limite d'utilisation optimale d'au moins 6 mois.

## Revendications

1. Emballage alimentaire (10) d'un produit laitier ou fromager (20), comprenant deux coques (12, 14), creuses, chaque coque s'étendant sur une profondeur (p12, p14) et une épaisseur (e) prédéfinies, l'emballage (10) étant configuré pour occuper deux positions, une première position, dite de repos, dans laquelle les deux coques (12, 14) sont scellées entre elles le long d'un plan de joint (16) de manière à former un espace interne, unique, recevant une portion de produit laitier ou fromager (20) occupant l'ensemble dudit espace interne, et une seconde position, dite d'utilisation, dans laquelle les deux coques (12, 14) sont séparées de manière à permettre un accès à ladite portion de produit (20), chacune des deux coques (12, 14) présentant un plan de symétrie (S) orthogonal audit plan de joint (16), chacune des deux coques (12, 14) présentant deux faces planes, lesdites deux faces étant situées de part et d'autre du plan de symétrie (S), ledit emballage étant **caractérisé par le fait que** lesdites deux faces s'étendent selon une direction parallèle audit plan de symétrie (S), et chaque coque (12, 14) présente une profondeur (p12, p14), mesurée dans ledit plan de symétrie (S), qui est supérieure à son épaisseur (e), mesurée dans ledit plan de joint (16), la profondeur (p12, p14) étant mesurée entre ledit plan de joint (16) et le fond de la coque (12, 14), l'épaisseur (e) étant mesurée entre lesdites deux faces planes.

2. Emballage (10) selon la revendication 1 , dans lequel lesdites deux coques (12, 14) sont en matière plastique.

3. Emballage (10) selon l'une quelconque des revendications précédentes, dans lequel les deux coques (12, 14) sont deux demi-coques identiques, de sorte que ledit espace interne présente un volume également réparti entre les deux coques (12, 14).

4. Emballage (10) selon l'une des revendications précédentes, dans lequel, en position de repos, les deux coques (12, 14) présentent un ensemble ayant une forme circulaire dans le plan de symétrie (S).

5. Procédé de fabrication d'un emballage alimentaire (10) d'un produit laitier ou fromager (20), comprenant les étapes suivantes :
a) thermoformage d'au moins une bobine de film plastique de sorte à obtenir deux coques (12, 14), creuses, chacune des deux coques (12, 14) présentant un plan de symétrie (S) et s'étendant sur une profondeur (p12, p14) et une épaisseur (e) prédéfinies, la profondeur (p12, p14) de chaque coque, mesurée dans ledit plan de symétrie (S), étant supérieure à son épaisseur (e), mesurée dans un plan orthogonal audit plan de symétrie (S), chacune des deux coques (12, 14) présentant deux faces planes situées de part et d'autre du plan de symétrie (S), lesdites deux faces s'étendant selon une direction parallèle audit plan de symétrie (S), la profondeur (p12, p14) étant mesurée entre ledit plan orthogonal et le fond de la coque (12, 14), l'épaisseur (e) étant mesurée entre lesdites deux faces planes,
b) scellage des deux coques (12, 14) le long dudit plan orthogonal, appelé plan de joint (16), de manière à former un espace interne, unique, destiné à recevoir une portion de produit laitier ou fromager (20) occupant l'ensemble dudit espace interne, avec création d'un col de dosage,
c) dosage, via ledit col de dosage, du produit laitier ou fromager de sorte à remplir
l'ensemble de l'espace formé entre les deux coques (12, 14), le dosage se faisant à une température supérieure à 70°C, notamment entre 72°C et 95°C,
d) scellage et fermeture du col,
e) découpe des coques (12, 14) de sorte à former une plage de scellage faisant saillie desdites coques (12, 14), au niveau du plan de joint (16), hors dudit espace interne, et de sorte à former, en outre, des languettes (18, 19) configurées pour actionner le passage de l'emballage (10) d'une position de repos, dans laquelle les deux coques (12, 14) sont scellées entre elles, vers une position d'utilisation, dans laquelle les deux coques (12, 14) sont séparées.

## Patentansprüche

1. Lebensmittelverpackung (10) für ein Milch- oder Käseprodukt (20), die zwei hohle Schalen (12, 14) umfasst, wobei sich jede Schale über eine vorbestimmte Tiefe (p12, p14) und eine vorbestimmte Dicke (e) erstreckt, wobei die Verpackung (10) so konfiguriert ist, dass sie zwei Positionen einnimmt, eine erste Position, die sogenannte Ruheposition, in der die beiden Schalen (12, 14) entlang einer Trennebene (16) miteinander versiegelt sind, um einen einzigen Innenraum zu bilden, der eine Portion Milch- oder Käseprodukt (20) aufnimmt, die die Gesamtheit besagten Innenraums einnimmt, und eine zweite Position, die sogenannte Gebrauchsposition, in der die beiden Schalen (12, 14) getrennt sind, um den Zugang zu besagter Produktportion (20) zu ermöglichen, wobei jede der beiden Schalen (12, 14) eine Symmetrieebene (S) aufweist, die orthogonal zu besagter Trennebene (16) ist, wobei jede der beiden Schalen (12, 14) zwei ebene Flächen aufweist, wobei besagte beiden Flächen zu beiden Seiten der Symmetrieebene (S) angeordnet sind, wobei besagte Verpackung **dadurch gekennzeichnet ist, dass** besagte zwei Flächen sich in einer Richtung parallel zu besagter Symmetrieebene (S) erstrecken und jede Schale (12, 14) eine Tiefe (p12, p14), gemessen in besagter Symmetrieebene (S), aufweist, die größer ist als ihre Dicke (e), gemessen in besagter Trennebene (16), wobei die Tiefe (p12, p14) zwischen besagter Trennebene (16) und dem Boden der Schale (12, 14) gemessen wird, wobei die Dicke (e) zwischen besagten zwei ebenen Flächen gemessen wird.

2. Verpackung (10) nach Anspruch 1, worin besagte zwei Schalen (12, 14) aus Kunststoff bestehen.

3. Verpackung (10) nach einem der vorstehenden Ansprüche, worin die zwei Schalen (12, 14) zwei identische Halbschalen sind, sodass besagter Innenraum ein Volumen aufweist, das gleichmäßig zwischen den zwei Schalen (12, 14) verteilt ist.

4. Verpackung (10) nach einem der vorstehenden Ansprüche, worin die zwei Schalen (12, 14) in der Ruheposition eine Montage aufweisen, die in der Symmetrieebene (S) eine kreisförmige Form hat.

5. Verfahren zur Herstellung einer Lebensmittelverpackung (10) für ein Milch- oder Käseprodukt (20), das die folgenden Schritte umfasst:
a) Warmformen mindestens einer Rolle Kunststofffolie, um zwei hohle Schalen (12, 14) zu erhalten, wobei jede der beiden Schalen (12, 14) eine Symmetrieebene (S) aufweist und sich über eine vorbestimmte Tiefe (p12, p14) und eine vorbestimmte Dicke (e) erstreckt, wobei die Tiefe (p12, p14) jeder Schale, gemessen in besagter Symmetrieebene (S), größer ist als ihre Dicke (e), gemessen in einer Ebene orthogonal zu besagter Symmetrieebene (S), wobei jede der beiden Schalen (12, 14) zwei ebene Flächen aufweist, die auf beiden Seiten der Symmetrieebene (S) angeordnet sind, wobei sich besagte zwei Flächen in einer Richtung parallel zu besagter Symmetrieebene (S) erstrecken, wobei die Tiefe (p12, p14) zwischen besagter orthogonalen Ebene und dem Boden der Schale (12, 14) gemessen wird, wobei die Dicke (e) zwischen besagten zwei ebenen Flächen gemessen wird,
b) Versiegeln der zwei Schalen (12, 14) entlang besagter orthogonalen Ebene, der sogenannten Trennebene (16), um einen einzigen Innenraum zu bilden, der dazu bestimmt ist, eine Portion des Milch- oder Käseprodukts (20) aufzunehmen, die den gesamten Innenraum einnimmt, wobei ein Dosierhals gebildet wird,
c) Dosieren des Milch- oder Käseprodukts über besagten Dosierhals, um den gesamten, zwischen den zwei Schalen (12, 14) gebildeten Raum zu füllen, wobei die Dosierung bei einer Temperatur von mehr als 70°C, insbesondere zwischen 72°C und 95°C, durchgeführt wird,
d) Versiegeln und Verschließen des Halses,
e) Schneiden der Schalen (12, 14), um einen Versiegelungsbereich zu bilden, der von besagten Schalen (12, 14) an der Trennebene (16) außerhalb des besagten Innenraums vorsteht, und um ferner Laschen (18, 19) zu bilden, die so konfiguriert sind, dass sie den Übergang der Verpackung (10) aus einer Ruheposition, in der die beiden Schalen (12, 14) miteinander versiegelt sind, in eine Gebrauchsposition, in der die beiden Schalen (12, 14) getrennt sind, betätigen.

## Claims

1. Food packaging (10) for a milk or cheese product (20), comprising two hollow shells (12, 14), each shell extending over a predetermined depth (p12, p14) and a predetermined thickness (e), the packaging (10) being configured so as to occupy two positions, a first position, called the rest position, in which the two shells (12, 14) are sealed together along a joining plane (16) so as to form a single internal space receiving a portion of milk or cheese product (20) occupying the whole of said internal space, and a second position, called the use position, in which the two shells (12, 14) are separated so as to allow access to said portion of product (20), each of the two shells (12, 14) has a plane of symmetry (S) orthogonal to said joining plane (16), each of the two shells (12, 14) has two plane faces, said two faces being located on either side of the plane of symmetry (S), said packaging being **characterised by** the fact that said two faces extend in a direction parallel to said plane of symmetry (S) and each shell (12, 14) has a depth (p12, p14), measured in said plane of symmetry (S), which is greater than its thickness (e), measured in said joining plane (16), the depth (p12, p14) being measured between said joining plane (16) and the bottom of the shell (12, 14), the thickness (e) being measured between said two plane faces.

2. The packaging (10) according to claim 1, wherein said two shells (12, 14) are made of plastic.

3. The packaging (10) according to any one of the preceding claims, wherein the two shells (12, 14) are two identical half-shells, so that said internal space has a volume equally distributed between the two shells (12, 14).

4. The packaging (10) according to any one of the preceding claims, wherein, in the rest position, the two shells (12, 14) present an assembly having a circular shape in the plane of symmetry (S).

5. A method of manufacturing a food packaging (10) of a milk or cheese product (20), comprising the following steps:
a) thermoforming at least one reel of plastic film so as to obtain two hollow shells (12, 14), each of the two shells (12, 14) having a plane of symmetry (S) and extending over a predetermined depth (p12, p14) and thickness (e), the depth (p12, p14) of each shell, measured in said plane of symmetry (S), being greater than its thickness (e), measured in a plane orthogonal to said plane of symmetry (S), each of the two shells (12, 14) having two plane faces located on either side of the plane of symmetry, said two faces extending in a direction parallel to said plane of symmetry (S), the depth (p12, p14) being measured between said orthogonal plane and the bottom of the shell (12, 14), the thickness (e) being measured between said two plane faces,
b) sealing the two shells (12, 14) along said orthogonal plane, called the joining plane (16), so as to form a single internal space intended to receive a portion of milk or cheese product (20) occupying the whole of said internal space, with creation of a dosing neck,
c) dosing, via the said dosing neck, of the milk or cheese product so as to fill the whole of the space formed between the two shells (12, 14), the dosing taking place at a temperature above 70°C, in particular between 72°C and 95°C,
d) sealing and closing the neck,
e) cutting the shells (12, 14) so as to form a sealing range projecting from said shells (12, 14) at the joining plane (16) out of said internal space, and so as to further form tabs (18, 19) configured to actuate the passage of the packaging (10) from a rest position, in which the two shells (12, 14) are sealed to each other, to a use position, in which the two shells (12, 14) are separated.
